# EUROPEAN PATENT APPLICATION

(11) **EP 3 447 625 A1**
(43) Date of publication of application: **27.02.2019**
(21) Application number: 17892905.5
(22) Date of filing: 24.07.2017
(51) Int. Cl.: G06F 3/0488

(54) **MULTI-SCREEN INTERACTION TOUCH DISPLAY METHOD, APPARATUS, STORAGE MEDIUM AND TERMINAL**

(30) Priority: 18.01.2017 CN 201710040538
(71) Applicant: ZTE Corporation, Shenzhen, Guangdong 518057 (CN)
(72) Inventor: WEI, Zhanting, Shenzhen Guangdong 518057 (CN)
(74) Representative: Taor, Simon Edward William
(86) International application number: PCT/CN2017/094149
(87) International publication number: WO 2018/133357

(57) **Abstract**

A multi-screen interaction touch display method, which is applied to an electronic device comprising at least two screens. The method comprises: determining at least one screen to be a secondary screen, and at least one screen other than the secondary screen to be a primary screen; acquiring a touch operation on the secondary screen, and determining, on the basis of a preset touch-coordinates correlation, the position on the primary screen corresponding to the touch operation; responding to an instruction corresponding to the touch operation on the determined position on the primary screen, and displaying the response result on the primary screen.

## Description

### TECHNICAL FIELD

The present application relates to, but is not limited to, the field of multi-screen display technology, and in particular, to a method, a device, a storage medium and a terminal for multi-screen interactive touch display.

### BACKGROUND

A resistive touch screen may be understood as a sensor, usually a combination of film and glass. The adjacent side of the film and glass is coated with a coating of ITO (Indium Tin Oxides) with excellent conductivity and transparency. When the touch operation is performed, the ITO coating on the lower layer of the film contacts the ITO coating on the upper layer of the glass, and the corresponding electrical signal is transmitted through the inductor, sent to the processor via the conversion circuit, and converted into X, Y values on the screen through calculation, thus completing the action of clicking and presenting on the screen. With the continuous development of mobile phones, dual-screen and folding screen mobile phones, as well as stretch screen mobile phones, have emerged. Therefore, while expanding the size of the display screen, there is a further demand for ease of operation and flexibility of display.

### SUMMARY

The following is an overview of the topics detailed in this document. This Summary is not intended to limit the scope of the claims.

The embodiment of the present application provides a method, a device, a storage medium, and a terminal for multi-screen interactive touch display.

An embodiment of the present application provides a method for multi-screen interactive touch display, applied to an electronic device, the electronic device including at least two screens; the method including:
determining at least one screen as an auxiliary screen, and at least one screen other than the auxiliary screen as a main screen;
acquiring a touch operation on the auxiliary screen, and determining a position on the main screen corresponding to the touch operation based on a preset correspondence relationship of touch coordinates; and
responding to an instruction corresponding to the touch operation at the determined position on the main screen, and displaying a response result on the main screen.

In an exemplary embodiment, the displaying a response result on the main screen may include displaying the response result at the determined location on the main screen.

In an exemplary embodiment, the auxiliary screen may be configured to at least implement control of the main screen according to an external touch operation; and
the main screen may be configured to at least display according to the control of the auxiliary screen.

In an exemplary embodiment, when the touch operation is a single touch on the auxiliary screen, displaying a response result on the main screen may include at least one of:
displaying a preset indication graphic at a position on the main screen corresponding to the touch position on the auxiliary screen; and
popping up corresponding function prompt information at a position on the main screen corresponding to the touch position on the auxiliary screen.

In an exemplary embodiment, after at least one of the displaying of the preset indication graphic and the popping-up corresponding function prompt information, the method may further include:
determining whether the touch operation has ended; if it is determined that the touch operation has ended, providing a corresponding instruction or responding to the function prompt information at the indication graphic.

In an exemplary embodiment, when the touch operation is multi-touching the auxiliary screen, and the main screen supports only a single touch, the method may further include:
acquiring a touch parameter of each of the multiple touch points, comparing the touch parameter with a preset condition, and determining an effective touch point according to the comparison result; or
when only one of the multiple touch points is moving, and the remaining touch points are stationary, determining the moving touch point as an effective touch point; or
determining a touch point that starts moving from a preset position as an effective touch point, and tracking a movement trajectory of the effective touch point; if the effective touch point is stationary, and there is a new touch point other than the effective touch point that starts to move from the preset position, determining that the new touch point is an effective touch point, and tracking the new effective touch point instead.

In an exemplary embodiment, acquiring a touch parameter of each of the multiple touch points, comparing the touch parameter with a preset condition, and determining an effective touch point according to the comparison result may include:
acquiring a moving speed of each touch point; if the moving speed of only one touch point is greater than a first threshold, determining that the touch point is an effective touch point; or if the moving speed of each touch point is greater than the first threshold value, determining that the touch point with the largest moving speed is an effective touch point; and
tracking the movement trajectory of the determined effective touch point, if the effective touch point is stationary, and the moving speed of another touch point other than the effective touch point is greater than the first threshold, determining that the other touch point is an effective touch point, and tracking the new effective touch point instead.

In an exemplary embodiment, acquiring a touch parameter of each of the multiple touch points, comparing the touch parameter with a preset condition, and determining an effective touch point according to the comparison result may include:
when each touch point is stationary, acquiring a pressure value of each stationary touch point; if the pressure value of only one touch point is greater than a second threshold, determining the touch point to be an effective touch point, and tracking the movement trajectory of the determined effective touch point; or if the pressure value of more than one touch point is greater than the second threshold, determining that the touch point with the largest pressure value is an effective touch point, and tracking the movement trajectory of the effective touch point; and
if the effective touch point is stationary, and the pressure value of the new touch point other than the effective touch point is greater than the second threshold, determining that the new touch point is an effective touch point, and tracking the new effective touch points instead.

In an exemplary embodiment, acquiring a touch parameter of each of the multiple touch points, comparing the touch parameter with a preset condition, and determining an effective touch point according to the comparison result may include:
determining the movement trajectory of each touch point; if the movement trajectory of the touch point is a preset movement trajectory, determining the touch point to be an effective touch point; or
determining a touch fingerprint corresponding to each touch point; if the touch fingerprint corresponding to the touch point is a preset touch fingerprint, determining the touch point to be an effective touch point.

In an exemplary embodiment, at the same time when determining at least one screen as the auxiliary screen and at least one screen as the main screen, or before determining at least one screen as the auxiliary screen and at least one screen as the main screen, the method may further include:
setting a display mode of the screen, wherein the display mode includes: a single screen display and a multi-screen display.

In an exemplary embodiment, the at least two screens may have the same size or different sizes; the angle between the at least two screens may be greater than 0 degrees and less than or equal to 360 degrees.

In an exemplary embodiment, the at least one screen is an ink screen or a flexible screen.

An embodiment of the present application also provides a device for multi-screen interactive touch display, applied to an electronic device, the electronic device including at least two screens; and the device including:
a screen determining module configured to determine that at least one screen is an auxiliary screen, and at least one screen other than the auxiliary screen is a main screen;
an acquiring module configured to acquire a touch operation on the auxiliary screen, and determine a position on the main screen corresponding to the touch operation based on the preset correspondence relationship of touch coordinates; and
a processing module configured to respond to an instruction corresponding to the touch operation at the determined position on the main screen, and display the response result on the main screen.

In an exemplary embodiment, the device may further include: a touch point determining module configured to:
when the touch operation is multi-touching the auxiliary screen, and the main screen supports only a single touch,
acquire a touch parameter of each of the multiple touch points, compare the touch parameter with a preset condition, and determine an effective touch point according to the comparison result; or
when only one of the multiple touch points is moving, and the remaining touch points are stationary, determine the moving touch point as an effective touch point; or
determine a touch point that starts moving from a preset position as an effective touch point, and track a movement trajectory of the effective touch point; if the effective touch point is stationary, and there is a new touch point other than the effective touch point that starts to move from the preset position, determine that the new touch point is an effective touch point, and track the new effective touch point instead.

In an exemplary embodiment, the device may further include: a setting module configured to, at the same time when the screen determining module determines at least one screen as the auxiliary screen and at least one screen as the main screen, or before the screen determining module determines at least one screen as the auxiliary screen and at least one screen as the main screen, set a display mode of the screen, wherein the display mode includes: a single screen display and a multi-screen display.

An embodiment of the present application also provides a storage medium storing a computer program, the computer program being executed by a processor to implement:
determining at least one screen as an auxiliary screen, and at least one screen other than the auxiliary screen as a main screen;
acquiring a touch operation on the auxiliary screen, and determining a position on the main screen corresponding to the touch operation based on a preset correspondence relationship of touch coordinates; and
responding to an instruction corresponding to the touch operation at the determined position on the main screen, and displaying a response result on the main screen.

An embodiment of the present application also provides a terminal including a memory, a processor, and a computer program stored on the memory and operative on the processor, the processor executing the computer program to implement:
determining at least one screen as an auxiliary screen, and at least one screen other than the auxiliary screen as a main screen;
acquiring a touch operation on the auxiliary screen, and determining a position on the main screen corresponding to the touch operation based on a preset correspondence relationship of touch coordinates; and
responding to an instruction corresponding to the touch operation at the determined position on the main screen, and displaying a response result on the main screen.

The method, the device, the storage medium and the terminal for multi-screen interactive touch display provided by the embodiment of the present application are applied to an electronic device including at least two screens, including: determining at least one screen as an auxiliary screen, and at least one screen other than the auxiliary screen as a main screen; acquiring a touch operation on the auxiliary screen, and determining a position on the main screen corresponding to the touch operation based on a preset correspondence relationship of touch coordinates; and responding to an instruction corresponding to the touch operation at the determined position on the main screen, and displaying a response result on the main screen. In the embodiment of the present application, based on the corresponding relationship between the main screen and the auxiliary screen, the touch operation on the determined auxiliary screen realizes response and display the touch operation result on the main screen, thereby satisfying the requirements of convenience of operation and the flexibility of display for the multi-screen and the large-size screen.

Other aspects will be apparent upon reading and understanding the drawings and detailed description.

### BRIEF DESCRIPTION OF DRAWINGS

Fig. 1 is a schematic flowchart of a method for multi-screen interactive touch display according to an embodiment of the present application;
Fig. 2 is a schematic structural diagram of a device for multi-screen interactive touch display according to an embodiment of the present application;
Fig. 3 is a schematic structural diagram of a processing module of Fig. 2;
Fig. 4 is a second schematic structural diagram of a device for multi-screen interactive touch display according to an embodiment of the present application;
Fig. 5 is a third schematic structural diagram of a device for multi-screen interactive touch display according to an embodiment of the present application;
Fig. 6 is a first flowchart of a method for determining an effective touch point when a screen is touched at multiple points according to an embodiment of the present application;
Fig. 7 is a second flowchart of a method for determining an effective touch point when a screen is touched at multiple points according to an embodiment of the present application;
Fig. 8 is a third flowchart of a method for determining an effective touch point when a screen is touched at multiple points according to an embodiment of the present application; and
Fig. 9 is a fourth flowchart of a method for determining an effective touch point when a screen is touched at multiple points according to an embodiment of the present application.

### DETAILED DESCRIPTION

The present application will be described in detail below with reference to the embodiments.

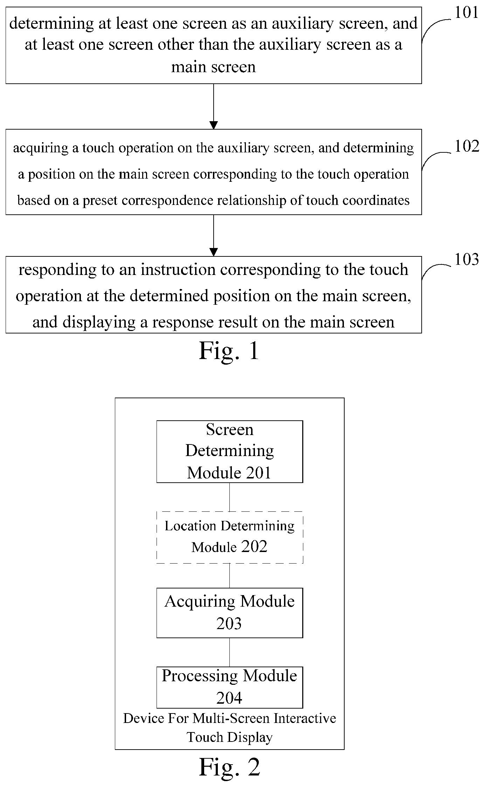

Fig. 1 is a schematic flowchart diagram of a method for multi-screen interactive touch display according to an embodiment of the present application. The method provided in this embodiment is applied to an electronic device, and the electronic device includes at least two screens. As shown in Fig. 1, the method provided in this embodiment includes the following steps.

In Step 101, at least one screen is determined as an auxiliary screen, and at least one screen other than the auxiliary screen is determined as a main screen.

In Step 102, a touch operation on the auxiliary screen is acquired, and a position on the main screen corresponding to the touch operation is determined based on a preset correspondence relationship of touch coordinates.

In Step 103, an instruction corresponding to the touch operation at the determined position on the main screen is responded to, a response result is displayed on the main screen.

The auxiliary screen is used to implement a touch function, and the main screen is at least used to implement a display function. The electronic device may be a dual-screen mobile phone, or may be a multi-faceted screen including two or more screens, a folding screen or a stretch screen and so on.

In this embodiment, based on the corresponding relationship between the main screen and the auxiliary screen, the touch operation on the determined auxiliary screen realizes response and displays the touch operation result on the main screen, thereby satisfying the requirements of convenience of operation and the flexibility of display for the multi-screen and the large-size screen.

In this embodiment, the displaying the response result on the main screen may include: displaying the response result at the determined location on the main screen.

In an exemplary embodiment, after the determining the main screen and the auxiliary screen, and before the acquiring the touch operation on the auxiliary screen, the method of the embodiment further includes: setting a touch coordinate correspondence relationship. Setting the touch coordinate correspondence relationship may include:
determining position coordinates of each point on the main screen and the auxiliary screen;
determining the mapping relationship between the position coordinates of each point on the main screen and the position coordinates of each point on the auxiliary screen.

In an exemplary embodiment, when the electronic device includes two screens, the determining at least one screen as an auxiliary screen, and the remaining screen as a main screen, may include:
with gravity sensing technology, the main screen and the auxiliary screen are determined according to the positions of the screens, such as: the upward screen is the main screen, and the downward screen is the auxiliary screen.

For example, the main screen and the auxiliary screen may be determined by a sensing device such as a gravity sensor or a gyroscope.

In an exemplary embodiment, the auxiliary screen may be used at least for controlling the main screen with an external touch operation; the main screen may be at least used for displaying according to the control of the auxiliary screen.

In an exemplary embodiment, when the touch operation is a single touch on the auxiliary screen, the displaying the response result on the main screen may include at least one of the following:
displaying a preset indication graphic at a position on the main screen corresponding to the touch position on the auxiliary screen;
popping up corresponding function prompt information at a position on the main screen corresponding to the touch position on the auxiliary screen.

Here, the preset indication graphic may include: a dot, a meteor line or an animation effect, and the like. For example, when a finger clicks on a certain point on the auxiliary screen, a dot is displayed on the corresponding point of the main screen; long pressing on the auxiliary screen causes displaying a circle on the corresponding point of the main screen; sliding on the auxiliary screen causes displaying a meteor line on the main screen; pressing on the auxiliary screen causes displaying an animation effect that a ring gradually becomes larger on the main screen.

The touch operation may include at least one of the following: a click, a long press, a slide on the screen, a multi-touch, a gesture, a pressure, and the like.

In an exemplary embodiment, after at least one of the displaying of the preset indication graphic and the popping-up corresponding function prompt information, the method of the embodiment may further include:
determining whether the touch operation has ended; if it is determined that the touch operation has ended, providing a corresponding instruction or responding to the function prompt information at the indication graphic; otherwise, continuing the current processing.

For example, when the auxiliary screen is touched, the function prompt information corresponding to the point may pop up at the corresponding point on the main screen. If the function prompt information is an operation required by the user, the finger may leave the screen and respond to the instruction corresponding to the function prompt information. If the function prompt information is not the operation required by the user, the finger does not leave the screen and does not respond to the operation.

In an exemplary embodiment, when the touch operation is multi-touching the auxiliary screen, and the main screen supports only a single touch, the method in this embodiment may further include:
determining an effective touch point from the multiple touch points.

In an exemplary embodiment, the determining an effective touch point from the multiple touch points may include:
acquiring a touch parameter of each of the multiple touch points, comparing the touch parameter with a preset condition, and determining an effective touch point according to the comparison result.

Here, the touch parameter may include: a moving speed, a pressure value or a moving trajectory, and the like.

In an exemplary embodiment, the acquiring a touch parameter of each of the multiple touch points, comparing the touch parameter with a preset condition, and determining an effective touch point according to the comparison result may include:
determining the moving speed of each touch point; if the moving speed of only one touch point is greater than a first threshold, determining that the touch point is an effective touch point; or if the moving speed of each touch point is greater than the first threshold value, determining that the touch point with the largest moving speed is an effective touch point;
tracking the movement trajectory of the determined effective touch point, if the effective touch point is stationary, and the moving speed of another touch point other than the effective touch point is greater than the first threshold, determining that the other touch point is an effective touch point, and tracking the new effective touch point instead.

Here, if the moving speed of each touch point is less than the first threshold, the touch operation is not responded.

In an exemplary embodiment, the determining an effective touch point from the multiple touch points may include:
when only one of the multiple touch points is moving, and the remaining touch points are stationary, determining the moving touch point as an effective touch point.

In an exemplary embodiment, the acquiring a touch parameter of each of the multiple touch points, comparing the touch parameter with a preset condition, and determining an effective touch point according to the comparison result may include:
when each touch point is stationary, acquiring a pressure value of each stationary touch point; if the pressure value of only one touch point is greater than a second threshold, determining the touch point to be an effective touch point, and tracking the movement trajectory of the determined effective touch point; or if the pressure value of more than one touch point is greater than the second threshold, determining that the touch point with the largest pressure value is an effective touch point, and tracking the movement trajectory of the effective touch point;
if the effective touch point is stationary, and the pressure value of the new touch point other than the effective touch point is greater than the second threshold, determining that the new touch point is an effective touch point, and tracking the new effective touch points instead.

Here, when it is determined that the pressure value of each of the stationary touch points is less than the second threshold, the touch operation is not responded.

For example, after the effective touch point leaves the screen, the effective touch point is determined again based on the pressure value of each touch point.

In an exemplary embodiment, the determining an effective touch point from the multiple touch points may include:
determining a touch point that starts moving from a preset position as an effective touch point, and tracking the movement trajectory of the effective touch point; if the effective touch point is stationary, and there is a new touch point other than the effective touch point that starts to move from the preset position, determining that the new touch point is an effective touch point, and tracking the new effective touch point instead.

For example, after the effective touch point leaves the screen, the effective touch point is re-determined.

Here, the preset position may be: a screen edge or a certain fixed point.

In an exemplary embodiment, the acquiring a touch parameter of each of the multiple touch points, comparing the touch parameter with a preset condition, and determining an effective touch point according to the comparison result may include:
determining the movement trajectory of each touch point; if the movement trajectory of the touch point is a preset movement trajectory, the touch point is determined to be an effective touch point.

Here, the preset movement trajectory may be a circle or an ellipse, or other preset shapes, and the like.

For example, in the above solution, after the effective touch point leaves the screen, an effective touch point is determined again according to the preset movement trajectory.

In an exemplary embodiment, the acquiring a touch parameter of each of the multiple touch points, comparing the touch parameter with a preset condition, and determining an effective touch point according to the comparison result may include:
determining a touch fingerprint corresponding to each touch point; if the touch fingerprint corresponding to the touch point is a preset touch fingerprint, determining the touch point to be an effective touch point.

In an exemplary embodiment, when the touch operation is multi-touching the auxiliary screen, and the main screen supports single-touch and multi-touch, the acquiring the touch on the auxiliary screen includes: acquiring a touch operation corresponding to each touch point on the auxiliary screen.

Here, for the main screen supporting single touch and multi-touch, it is determined that all the touch points are effective touch points, and the touch operation of multi-touch points is responded.

For example, at the same time when determining at least one screen as the auxiliary screen and at least one screen as the main screen, or before determining at least one screen as the auxiliary screen and at least one screen as the main screen, the method of the embodiment may further include:
setting a display mode of the screen, wherein the display mode includes: a single screen display and a multi-screen display. If it is set to single screen display, a valid screen is determined from a plurality of screens.

For example, one or more switches may be set. When it is determined to be a single screen display, only one screen is turned on (valid), and other screens are turned off.

In an exemplary embodiment, the at least two screens may have the same size or different sizes; the angle between the at least two screens may be greater than 0 degrees and less than or equal to 360 degrees.

Being equal to 360 degrees may be: the two screens are respectively located on the front and back of the terminal (for example, a mobile phone).

For example, the at least one screen may be an ink screen or a flexible screen.

In an exemplary embodiment, when the sizes of the at least two screens are different, the determining a position on the main screen corresponding to the touch operation based on a preset correspondence relationship of touch coordinates may include:
determining that a length ratio and a width ratio of the large screen to the small screen in the two screens are a:1 and b:1, respectively;

If the small screen is an auxiliary screen, and the position of the touch operation is (X, Y), it is determined that the position on the corresponding main screen is (±aX, bY).

If the large screen is an auxiliary screen, and the position of the touch operation is (X, Y), it is determined that the position on the corresponding main screen is (±X/a, Y/b).

Where, X, Y are positive integers, and the determination rules of the origin positions of the two screens are the same.

The embodiment of the present application further provides a computer readable storage medium, where the storage medium stores a computer program. The program code that implements the steps described above when the computer program is executed by a processor.

In this embodiment, the foregoing storage medium may include, but not limited to, a USB flash drive, a Read-Only Memory (ROM), a Random Access Memory (RAM), a mobile hard disk, a magnetic disk, or an optical disk, and a variety of media that may store program codes.

The embodiment of the present application further provides a device for multi-screen interactive touch display, which is applied to an electronic device including at least two screens for implementing the above embodiments and exemplary embodiments, repeated description will be omitted. As used hereinafter, the term "module" may be implemented in software, hardware, or a combination of software and hardware for a predetermined function. Although the devices described in the following embodiments are preferably implemented in software, hardware, or a combination of software and hardware is also possible and contemplated. As shown in Fig. 2, the device provided in this embodiment includes:
a screen determining module 201 configured to determine that at least one screen is an auxiliary screen, and at least one screen other than the auxiliary screen is a main screen; wherein the auxiliary screen is used to implement a touch function, and the main screen is used at least to implement display function;
an acquiring module 203 configured to acquire a touch operation on the auxiliary screen, and determine a position on the main screen corresponding to the touch operation based on the preset correspondence relationship of touch coordinates;
a processing module 204 configured to respond to an instruction corresponding to the touch operation at the determined position on the main screen, and display the response result on the main screen.

The auxiliary screen is used to implement a touch function, and the main screen is at least used to implement a display function. The electronic device may be a dual-screen mobile phone, or may be a multi-faceted screen including two or more screens, a folding screen or a stretch screen and so on.

In this embodiment, based on the corresponding relationship between the main screen and the auxiliary screen, the touch operation on the determined auxiliary screen realizes response and displays the touch operation result on the main screen, thereby satisfying the requirements of convenience of operation and the flexibility of display for the multi-screen and the large-size screen.

In an exemplary embodiment, the device of this embodiment may further include: a location determining module 202 configured to, after the screen determining module 201 determines the main screen and the auxiliary screen, and before the acquiring module 203 acquires the touch operation on the auxiliary screen, determine position coordinates of each point on the main screen and the auxiliary screen; and determine the mapping relationship between the position coordinates of each point on the main screen and the position coordinates of each point on the auxiliary screen.

In an exemplary embodiment, when the electronic device includes two screens, the screen determining module 201 is configured to determine that the at least one screen is an auxiliary screen and the remaining screen is a main screen by the following manner.

With the gravity sensing technology, the main screen and the auxiliary screen are determined according to the positions of the screens, such as the upward screen is the main screen, and the downward screen is the auxiliary screen.

For example, the main screen and the auxiliary screen may be determined by a sensing device such as a gravity sensor or a gyroscope.

In an exemplary embodiment, the auxiliary screen is configured to at least control the main screen with an external touch operation; the main screen is at least used for displaying according to the control of the auxiliary screen.

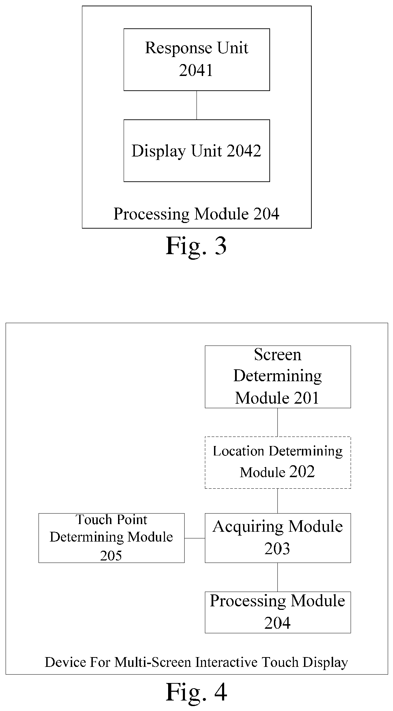

In an exemplary embodiment, as shown in Fig. 3, the processing module 204 may include:
a response unit 2041 configured to respond to an instruction corresponding to the touch operation at the determined position on the main screen;
a display unit 2042 is configured to display the response result on the main screen.

In an exemplary embodiment, when the touch operation is a single touch of the auxiliary screen, the display unit 2042 is configured to perform at least one of the following:
displaying a preset indication graphic at a position on the main screen corresponding to the touch position on the auxiliary screen;
popping up corresponding function prompt information at a position on the main screen corresponding to the touch position on the auxiliary screen.

Here, the preset indication graphic may include: a dot, a meteor line or an animation effect, and the like. For example, when a finger clicks on a certain point on the auxiliary screen, a dot is displayed on the corresponding point of the main screen; long pressing on the auxiliary screen causes displaying a circle on the corresponding point of the main screen; sliding on the auxiliary screen causes displaying a meteor line on the main screen; pressing on the auxiliary screen causes displaying an animation effect that a ring gradually becomes larger on the main screen.

The touch operation may include: a click, a long press, a slide on the screen, a multi-touch, a gesture, a pressure, and the like.

In an exemplary embodiment, after the display unit 2042 displays at least one of the preset indication graphic and pops up corresponding function prompt information, the display unit 2042 may further be configured to determine whether the touch operation has ended, and notify the determination result to the response unit 2041.

Correspondingly, the response unit 2041 may be further configured to: after receiving the notification that the touch operation has ended, provide a corresponding instruction or respond to the function prompt information at the indication graphic; otherwise, continue the current processing.

For example, when the auxiliary screen is touched, the function prompt information corresponding to the point may pop up at the corresponding point on the main screen. If the function prompt information is an operation required by the user, the finger leaves the screen and responds to the instruction corresponding to the function prompt information. If the function prompt information is not an operation required by the user, the finger does not leave the screen and does not respond to the operation.

In an exemplary embodiment, as shown in Fig. 4, the device in this embodiment may further include: a touch point determining module 205 configured to, when the touch operation is multi-touching the auxiliary screen, and the main screen supports only a single touch, determine an effective touch point from the multiple touch points.

The touch point determining module 205 may be configured to determine an effective touch point from the multiple touch points by:
acquiring a touch parameter of each of the multiple touch points, comparing the touch parameter with a preset condition, and determining an effective touch point according to the comparison result; or
when it is determined that only one of the multiple touch points is moving, and the remaining touch points are stationary, determining the moving touch point as an effective touch point; or
determining a touch point that starts moving from a preset position as an effective touch point, and tracking the movement trajectory of the effective touch point; if the effective touch point is stationary, and there is a new touch point other than the effective touch point that starts to move from the preset position, determining that the new touch point is an effective touch point, and tracking the new effective touch point instead.

Here, the preset position may be: a screen edge or a certain fixed point.

For example, the touch point determining module 205 may be configured to acquire a touch parameter of each of the multiple touch points, compare the touch parameter with a preset condition, and determine an effective touch point according to the comparison result by:
determining the moving speed of each touch point; if the moving speed of only one touch point is greater than a first threshold, determining that the touch point is an effective touch point; or if the moving speed of each touch point is greater than the first threshold value, determining that the touch point with the largest moving speed is an effective touch point;
tracking the movement trajectory of the determined effective touch point, if the effective touch point is stationary, and the moving speed of another touch point other than the effective touch point is greater than the first threshold, determining that the other touch point is an effective touch point, and tracking the new effective touch point instead.

Here, if the moving speed of each touch point is less than the first threshold, the touch operation is not responded.

For example, the touch point determining module 205 may be configured to acquire a touch parameter of each of the multiple touch points, compare the touch parameter with a preset condition, and determine an effective touch point according to the comparison result by:
when each touch point is stationary, acquiring a pressure value of each stationary touch point; if the pressure value of only one touch point is greater than a second threshold, determining the touch point to be an effective touch point, and tracking the movement trajectory of the determined effective touch point; or if the pressure value of more than one touch point is greater than the second threshold, determining that the touch point with the largest pressure value is an effective touch point, and tracking the movement trajectory of the effective touch point;
if the effective touch point is stationary, and the pressure value of the new touch point other than the effective touch point is greater than the second threshold, determining that the new touch point is an effective touch point, and tracking the new effective touch points instead.

Here, when it is determined that the pressure value of each of the stationary touch points is less than the second threshold, the touch operation is not responded.

For example, the touch point determining module 205 may be configured to acquire a touch parameter of each of the multiple touch points, compare the touch parameter with a preset condition, and determine an effective touch point according to the comparison result by:
determining the movement trajectory of each touch point; if the movement trajectory of the touch point is a preset movement trajectory, determining the touch point to be an effective touch point;
or,
determining a touch fingerprint corresponding to each touch point; if the touch fingerprint corresponding to the touch point is a preset touch fingerprint, determining the touch point to be an effective touch point.

Here, the preset movement trajectory may include a circle or an ellipse, or other preset shapes, and the like.

In an exemplary embodiment, when the touch operation is multi-touching the auxiliary screen, and the main screen supports single touch and multi-touch,
the acquiring module 203 may be configured to acquire a touch operation corresponding to each touch point on the auxiliary screen, and determine a position on the main screen corresponding to the touch operation corresponding to each touch point based on the position coordinates of the touch operation corresponding to each touch point on the auxiliary screen and a mapping relationship between position coordinates of each point on each main screen and the position coordinates of each point on the auxiliary screen

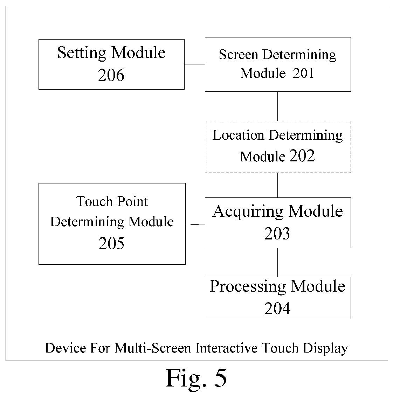

In an exemplary embodiment, as shown in Fig. 5, the device of this embodiment may further include:
a setting module 206 configured to, at the same time when the screen determining module 201 determines at least one screen as the auxiliary screen and at least one screen as the main screen, or before the screen determining module 201 determines at least one screen as the auxiliary screen and at least one screen as the main screen, set a display mode of the screen, wherein the display mode includes: a single screen display and a multi-screen display. If it is set to single screen display, a valid screen is determined from a plurality of screens.

For example, one or more switches may be set. When it is determined to be a single screen display, only one screen is turned on (valid), and other screens are turned off.

In practical applications, the modules in the above devices may all be implemented by the same processor; or, the above modules are respectively implemented by multiple processors.

The embodiment of the present application further provides a terminal, including a memory, a processor, and a computer program stored on the memory and operable on the processor, the processor executing the computer program to implement the following steps:
determining at least one screen as an auxiliary screen, and determining at least one screen other than the auxiliary screen as a main screen.
acquiring a touch operation on the auxiliary screen, and determining a position on the main screen corresponding to the touch operation based on a preset correspondence relationship of touch coordinate; and
responding to an instruction corresponding to the touch operation at the determined position on the main screen, and displaying a response result on the main screen.

The present application is described in detail below in conjunction with the scenario embodiments.

Embodiment 1: A touch display method of a symmetric double-sided screen.

In this embodiment, the front and back sides of the mobile phone are respectively configured with one screen, the main screen is a liquid screen, and the auxiliary screen is an ink screen. The two screens are completely symmetrical, and the center point of the main screen may be determined as A (0, 0), the center point of the auxiliary screen is B (0, 0).

For example, a point (X, Y) on the auxiliary screen is symmetrically mapped to a corresponding point (-X, Y) on the main screen.

When a finger touches a point on the auxiliary screen, an indication point is displayed at the corresponding point on the main screen.

When the finger touches a point (X, Y) on the auxiliary screen, the phone responds to the function instruction at the symmetry point (-X, Y) on the main screen.

For example, when a touch point, a long press, a screen sliding, a multi-touch, a gesture, a pressure, etc. are touched at a certain point on the auxiliary screen, an instruction corresponding to the point is popped up at the corresponding point on the main screen. When the instruction is an operation required by the user, the finger leaves the screen, and the corresponding function prompt information corresponding to the click, long press, screen sliding, multi-touch, gesture, pressure, etc. is responded; otherwise, the finger does not leave the screen and the operation is not responded.

For example, when the finger clicks at a certain point on the auxiliary screen, a dot may be displayed at the corresponding point of the main screen. When the auxiliary screen is long pressed, a circle may be displayed at the corresponding point of the main screen. When the finger slides on the auxiliary screen, a meteor line may be displayed at the corresponding position on the main screen. When the finger presses on the auxiliary screen, an animation effect in which the ring gradually becomes larger may be displayed at the corresponding position of the main screen.

For example, one or more switches may be provided for controlling single screen operation or dual screen operation.

For example, after setting a single screen operation, the current running screen is selected.

Embodiment 2: A touch display method for symmetric double screens of an equal size.

In this embodiment, two identical screens are arranged on the front and back sides of the mobile phone, and the main and auxiliary screens are determined according to the principle of gravity sensing. The upward side is determined as the main screen, and the downward side is determined as the auxiliary screen. The main screen is used for both of the display and touch functions, and the auxiliary screen is only used for touch function. The two screens are completely symmetrical, the center point (0, 0) of the main screen is determined, and the center point (0, 0) of the auxiliary screen is determined. The lines of the two center points are perpendicular to the two screens.

For example, a point (X, Y) on the auxiliary screen is symmetrically mapped to a corresponding point (-X, Y) on the main screen.

When the finger touches a point (X, Y) on the auxiliary screen, the phone responds to a function instruction at a point (-X, Y) on the main screen.

When a finger clicks, long presses, slides, gestures, etc. at a certain point (X, Y) on the auxiliary screen, the corresponding point (-X, Y) on the main screen of the mobile phone responds to the corresponding operation of click, long press, and screen sliding, etc.

The finger performs a gesture operation on the auxiliary screen, and the main screen responds to the function instruction corresponding to the gesture. For example, when a click, a long press, a screen sliding, a multi-touch, a gesture, a pressure, etc. are touched at a certain point on the auxiliary screen, an instruction corresponding to the point is popped up on the corresponding point on the main screen. When the instruction is an operation required by the user, the finger leaves the screen, and the corresponding function prompt information corresponding to the click, long press, screen sliding, multi-touch, gesture, pressure, etc. is responded; otherwise, the finger does not leave the screen and the operation is not responded.

For example, when the finger clicks at a certain point on the auxiliary screen, a dot may be displayed at the corresponding point of the main screen. When the auxiliary screen is long pressed, a circle may be displayed at the corresponding point of the main screen. When the finger slides on the auxiliary screen, a meteor line may be displayed at the corresponding position on the main screen. When the finger presses on the auxiliary screen, an animation effect in which the ring gradually becomes larger may be displayed at the corresponding position of the main screen.

For example, one or more switches may be provided for controlling single screen operation or dual screen operation.

For example, after setting a single screen operation, the current running screen is selected.

Embodiment 3: A touch display method with two screens of different sizes.

In this embodiment, two screens are arranged on the front and back sides of the mobile phone, and the main and auxiliary screens are determined according to the principle of gravity sensing. The upward side is determined as the main screen, and the downward side is determined as the auxiliary screen. The planes of the two screens are parallel to each other and have the same shape, but the screen sizes are not equal. The length and width of the screens are a:1 and b:1, respectively. The center point (0, 0) of the main screen may be determined and the center point (0, 0) of the auxiliary screen may be determined.

For example, when the small screen is an auxiliary screen, a point (x, y) on the auxiliary screen is symmetrically mapped to a corresponding point on the main screen (-ax, by). When the finger touches a point (x, y) on the auxiliary screen, the phone responds to the function instructions at the point (-ax, by) on the main screen.

The finger clicks, long presses, slides, gestures, etc. at a certain point (x, y) on the auxiliary screen. The corresponding point (-ax, by) on the main screen of the mobile phone responds to the click, long press, and sliding, gesture, etc.

For example, when a click, a long press, a screen sliding, a multi-touch, a gesture, a pressure, etc. are touched at a certain point on the auxiliary screen, an instruction corresponding to the point is popped up at the corresponding point on the main screen. When the instruction is an operation required by the user, the finger leaves the screen, and the corresponding function prompt information corresponding to the click, long press, screen sliding, multi-touch, gesture, pressure, etc. is responded; otherwise, the finger does not leave the screen and the operation is not responded.

For example, when the large screen is the auxiliary screen, a point (x, y) on the auxiliary screen is symmetrically mapped to a corresponding point on the main screen (-x/a, y/b); the finger touches the point on the auxiliary screen (x, y), the phone responds to the function instructions at the points (-x/a, y/b) on the main screen.

The finger clicks, long presses, slides, etc. at a certain point (x, y) on the auxiliary screen, and the mobile phone responds to operation of the click, the long press, the sliding, etc. of the point at the corresponding point (-x/a, y/a) of on the main screen.

For example, when a click, a long press, a screen sliding, a multi-touch, a gesture, a pressure, etc. are touched at a certain point on the auxiliary screen, an instruction corresponding to the point is popped up on the corresponding point on the main screen. When the instruction is an operation required by the user, the finger leaves the screen, and the corresponding function prompt information corresponding to the click, long press, screen sliding, multi-touch, gesture, pressure, etc. is responded; otherwise, the finger does not leave the screen and the operation is not responded.

For example, when the finger clicks at a certain point on the auxiliary screen, a dot may be displayed at the corresponding point of the main screen. When the auxiliary screen is long pressed, a circle may be displayed at the corresponding point of the main screen. When the finger slides on the auxiliary screen, a meteor line may be displayed at the corresponding position on the main screen. When the finger presses on the auxiliary screen, an animation effect in which the ring gradually becomes larger may be displayed at the corresponding position of the main screen.

For example, one or more switches may be provided for controlling single screen operation or dual screen operation.

For example, after setting a single screen operation, the current running screen is selected.

Embodiment 4: A touch display method with two screens of different sizes.

In this embodiment, two screens are arranged on the front and back sides of the mobile phone, and the main and auxiliary screens are determined according to the principle of gravity sensing. The upward side is determined as the main screen, and the downward side is determined as the auxiliary screen. The two screens have the same shape. The length and width of the screens are a:1 and b:1, respectively.

When the large screen is the main screen, it is displayed by pixel A. When the small screen is the main screen, it is displayed by pixel B. The center point (0, 0) of the main screen may be determined and the center point (0, 0) of the auxiliary screen may be determined.

For example, when the small screen is an auxiliary screen, a point (x, y) on the auxiliary screen is symmetrically mapped to a corresponding point on the main screen (-ax, by). When the finger touches a point (x, y) on the auxiliary screen, the phone responds to the function instructions at the point (-ax, by) on the main screen.

The finger clicks, long presses, slides, gestures, etc. at a certain point (x, y) on the auxiliary screen. The corresponding point (-ax, by) on the main screen of the mobile phone responds to the click, long press, and sliding, etc.

When the finger performs a gesture operation on the auxiliary screen, the function instruction corresponding to the gesture on the main screen is responded.

For example, when the large screen is the auxiliary screen, each point (x, y) on the auxiliary screen is symmetrically mapped to a corresponding point on the main screen (-x/a, y/b); the finger touches the point on the auxiliary screen (x, y), the phone responds to the function instructions at the points (-x/a, y/b) on the main screen.

The finger clicks, long presses, slides, etc. at a certain point (x, y) on the auxiliary screen, and the mobile phone responds to operation of the click, the long press, the sliding, etc. of the point at the corresponding point (-x/a, y/a) of on the main screen.

For example, when a click, a long press, a screen sliding, a multi-touch, a gesture, a pressure, etc. are touched at a certain point on the auxiliary screen, an instruction corresponding to the point is popped up on the corresponding point on the main screen. When the instruction is an operation required by the user, the finger leaves the screen, and the corresponding function prompt information corresponding to the click, long press, screen sliding, multi-touch, gesture, pressure, etc. is responded; otherwise, the finger does not leave the screen and the operation is not responded.

For example, when the finger clicks at a certain point on the auxiliary screen, a dot may be displayed at the corresponding point of the main screen. When the auxiliary screen is long pressed, a circle may be displayed at the corresponding point of the main screen. When the finger slides on the auxiliary screen at a point corresponding to the main screen, a meteor line may be displayed at the corresponding position on the main screen. When the finger presses on the auxiliary screen, an animation effect in which the ring gradually becomes larger may be displayed at the corresponding position of the main screen.

For example, one or more switches may be provided for controlling single screen operation or dual screen operation.

For example, after setting a single screen operation, the current running screen is selected.

Embodiment 5: Folding multi-screen display method, applicable for wristwatches and super large screens.

In this embodiment, the terminal is configured with multiple screens A, B, C, D, and E; and the plurality of screens are transparent and foldable.

For example, the multiple screens, when being spread, may be on the same plane.

For example, after the multiple screens are spread, the multiple screens may be tiled together.

In the application, the content may be presented on the A, B, C, D, E screens according to the total size of the screens of A, B, C, D, E for example, and the pixel position of each point on the screen. The processing method may be referred to the processing method for the double screens, and will not be described here.

For example, the user may perform a touch operation on the screen to complete operations such as clicking, long pressing, sliding, gesture, and the like.

Embodiment 6: Display method of a stretch screen.

In this embodiment, the mobile phone is configured with a stretch screen. The screen is stretched, the screen becomes large, and each point on the screen has its own relative position (X, Y).

The screen shrinks and each point on the screen has its own relative position (X, Y).

In the application, the content may be presented on the screens according to the total size of the screens and the pixel position (X, Y) of each point. For the related processing manner, refer to the processing mode of the double screens, and therefore no further details are provided herein.

For example, the user may perform a touch operation on the screen to complete operations such as clicking, long pressing, sliding, gesture, and the like.

Embodiment 7: 360-degree full-screen interactive touch and display method.

In this embodiment, the mobile phone is configured with a full screen of 360 degrees; the main and auxiliary screens are determined according to gravity sensing, the upward screen is the main screen, and the downward screen is the auxiliary screen. The two screens are completely symmetrical, and the center point of the main screen may be determined as A (0, 0), the center point of the auxiliary screen is B (0, 0).

For example, a point (X, Y) on the auxiliary screen is symmetrically mapped to a corresponding point (-X, Y) on the main screen. When a finger touches a point on the auxiliary screen, and an indication point is displayed on the corresponding point on the main screen. When the finger touches the point (X, Y) on the auxiliary screen, and the phone responds to the function instruction at the point (-X, Y) on the main screen.

The finger clicks, long presses, slides, gestures, etc. at a certain point (X, Y) on the auxiliary screen, and the corresponding point (-X, Y) on the main screen of the mobile phone responds to the click, long press, slide, gestures, etc. at the point.

For example, when a click, a long press, a screen sliding, a multi-touch, a gesture, a pressure, etc. are touched at a certain point on the auxiliary screen, an instruction corresponding to the point is popped up on the corresponding point on the main screen. When the instruction is an operation required by the user, the finger leaves the screen, and the corresponding function prompt information corresponding to the click, long press, screen sliding, multi-touch, gesture, pressure, etc. is responded; otherwise, the finger does not leave the screen and the operation is not responded.

For example, when the finger clicks at a certain point on the auxiliary screen, a dot may be displayed at the corresponding point of the main screen. When the auxiliary screen is long pressed, a circle may be displayed at the corresponding point of the main screen. When the finger slides on the auxiliary screen, a meteor line may be displayed at the corresponding position on the main screen. When the finger presses on the auxiliary screen, an animation effect in which the ring gradually becomes larger may be displayed at the corresponding position of the main screen.

For example, when there is a multi-touch screen, the ineffective touch points are excluded, and the effective touch points are determined, which may include the following solutions.

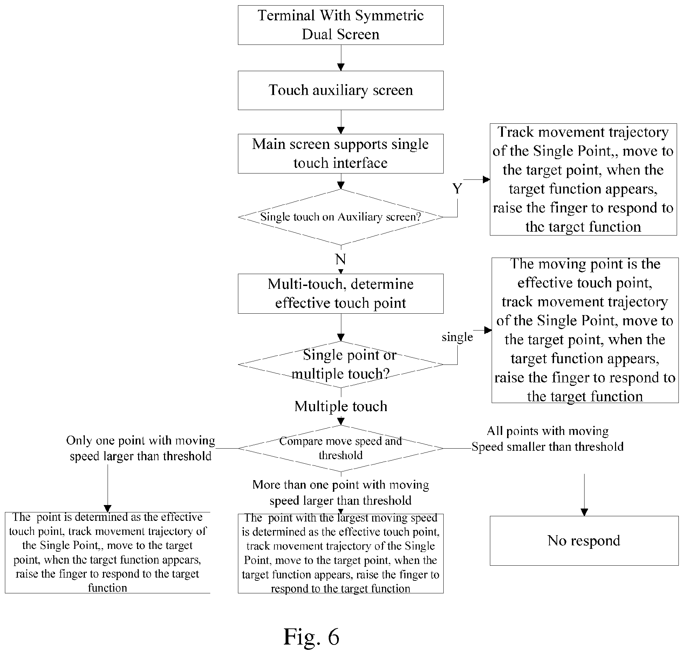

In solution 1, the touch point moving speed threshold is set to 500 PPI (Pixels Per Inch) / S. For a function interface that only supports single touch, when more than two touch points move, and the moving speeds of the touch points are all less than the threshold, the operation is not responded. When only the moving speed of one touch point is larger than a threshold, it is confirmed that the point is an effective touch point. When the moving speeds of the touch points are all greater than the threshold, the point with the maximum speed is determined as the effective touch point, and the movement trajectory of the point is tracked. Until the touch point is stationary, and there are other touch point having a moving speed larger than the threshold, the new touch point is tracked instead. The relevant processing flow is shown in Fig. 6.

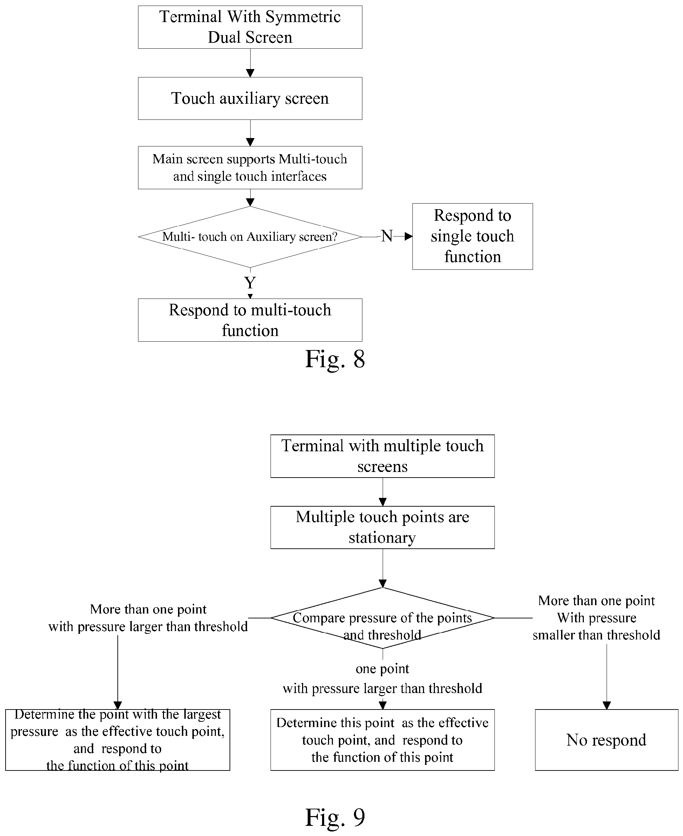

For example, for a multi-touch function interface, all touch points are determined as effective touch points and multi-touch functions are responded. The relevant processing flow is shown in Fig. 8.

In solution 2, for a function interface that only supports single-touch, when multi-touch is operated, only one point is moved, and other points are stationary, it is determined that the moving point is an effective touch point, and the movement trajectory of the effective touch point is tracked. The relevant processing flow is shown in Fig. 6.

For example, for a multi-touch functional interface, all touch points are determined as effective touch points, consistent with single-sided screen processing techniques.

In solution 3, when multi-touch are conducted and the multiple touch points are stationary, the touch point with pressure larger than the threshold is determined as an effective touch point. The movement trajectory of the effective touch point is tracked. When the point is stationary and pressures of the other points are greater than the threshold, the movement trajectory of new effective touch point is tracked instead. The relevant processing flow is shown in Fig. 9.

For example, the pressure value of each touch point at the time when the mobile phone is held may be collected, a daily touch pressure value is determined, and the pressure threshold is determined based on the pressure value.

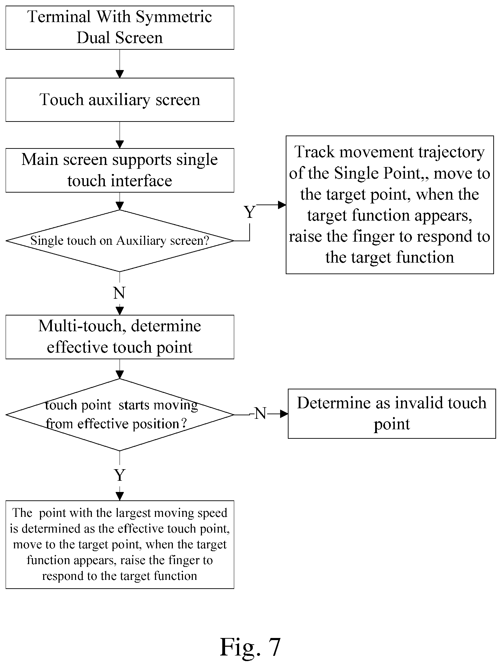

In solution 4, the touch point that starts moving from the edge of the screen or a fixed point is determined as an effective touch point, and the movement trajectory of the effective touch point is tracked. When a touch point, a long press, a screen sliding, a multi-touch, a gesture, a pressure, etc. are touched at a certain point on the auxiliary screen, an instruction corresponding to the point is popped up at the corresponding point on the main screen. When the instruction is an operation required by the user, the finger leaves the screen, and the corresponding function prompt information corresponding to the click, long press, screen sliding, multi-touch, gesture, pressure, etc. is responded; otherwise, the finger does not leave the screen and the operation is not responded. The relevant processing flow is shown in Fig. 7.

For example, the above solutions may be applied and executed independently, in parallel, or in a crossing manner.

For example, one or more switches may be provided for controlling single screen operation or dual screen operation.

For example, after setting a single screen operation, the current running screen is selected.

For example, a user of a 360 degree screen may customize the functions that need to be displayed, and display the content on a flat surface according to each screen size and pixel bit.

Those skilled in the art will appreciate that embodiments of the present application may be provided as a method, system, or computer program product. Accordingly, the application may take the form of a hardware embodiment, a software embodiment, or an embodiment in combination with software and hardware. Moreover, the application may take the form of a computer program product embodied on one or more computer-usable storage media (including but not limited to disk storage and optical storage, etc.) in which computer usable program code is embodied.

The present application is described with reference to flowchart illustrations and/or block diagrams of methods, devices (systems), and computer program products according to embodiments of the present application. It will be understood that each flow and/or block of the flowcharts and/or block diagrams, and combinations of flows and/or blocks in the flowcharts and/or block diagrams can be implemented by computer program instructions. These computer program instructions may be provided to a processor of a general purpose computer, special purpose computer, embedded processor, or other programmable data processing device to produce a machine for the execution of instructions for execution by a processor of a computer or other programmable data processing device. Means for implementing the functions specified in one or more flows of the flowchart or in a block or blocks of the flowchart.

The computer program instructions may also be stored in a computer readable memory that may direct a computer or other programmable data processing device to operate in a particular manner, such that the instructions stored in the computer readable memory produce an article of manufacture comprising the instruction device. The apparatus implements the functions specified in one or more blocks of a flow or a flow and/or block diagram of the flowchart.

These computer program instructions may also be loaded onto a computer or other programmable data processing device such that a series of operational steps are performed on a computer or other programmable device to produce computer-implemented processing for execution on a computer or other programmable device. The instructions provide steps for implementing the functions specified in a block or blocks of a flow or a flow and/or a block diagram of a flowchart.

Those of ordinary skill in the art will appreciate that all or some of the steps, systems, and functional blocks/units of the methods disclosed above may be implemented as software, firmware, hardware, and suitable combinations thereof. In a hardware implementation, the division between functional modules/units mentioned in the above description does not necessarily correspond to the division of physical components; for example, one physical component may have multiple functions, or one function or step may be composed of several physical components work together. Some or all of the components may be implemented as software executed by a processor, such as a digital signal processor or microprocessor, or as hardware, or as an integrated circuit, such as an application specific integrated circuit. Such software may be distributed on a computer readable medium, which may include computer storage media (or non-transitory media) and communication media (or transitory media). As is well known to those of ordinary skill in the art, the term computer storage medium includes both volatile and nonvolatile, removable and non-removable media implemented in any method or technology for storing information, such as computer readable instructions, data structures, program modules or other data. Computer storage media includes, but is not limited to, RAM, ROM, EEPROM, flash memory or other memory technology, CD-ROM, digital versatile disc (DVD) or other optical disc storage, magnetic cassette, magnetic tape, magnetic disk storage or other magnetic storage device, or may be any other medium used to store the desired information and that may be accessed by a computer. Moreover, it is well known to those of ordinary skill in the art that communication media typically comprise computer readable instructions, data structures, program modules, or other data in a modulated data signal, such as a carrier wave or other transport mechanism, and may include any information delivery media..

The above is only an exemplary embodiment of the present application, and is not intended to limit the scope of the present application.

### Industrial applicability

The embodiment of the present disclosure provides a method and a device for multi-screen interactive touch display, which meets the requirements of multi-screen and large-size screen for operation convenience and display flexibility.

## Claims

1. A method for multi-screen interactive touch display, applied to an electronic device, the electronic device comprising at least two screens; the method comprising:
determining at least one screen as an auxiliary screen, and at least one screen other than the auxiliary screen as a main screen;
acquiring a touch operation on the auxiliary screen, and determining a position on the main screen corresponding to the touch operation based on a preset correspondence relationship of touch coordinates; and
responding to an instruction corresponding to the touch operation at the determined position on the main screen, and displaying a response result on the main screen.

2. The method according to claim 1, wherein the displaying a response result on the main screen comprises displaying the response result at the determined location on the main screen.

3. The method according to claim 1 wherein
the auxiliary screen is configured to at least implement control of the main screen according to an external touch operation; and
the main screen is configured to at least display according to the control of the auxiliary screen.

4. The method according to claim 1 or 2, wherein when the touch operation is a single touch on the auxiliary screen, displaying a response result on the main screen comprising at least one of:
displaying a preset indication graphic at a position on the main screen corresponding to the touch position on the auxiliary screen; and
popping up corresponding function prompt information at a position on the main screen corresponding to the touch position on the auxiliary screen.

5. The method of claim 4, wherein after at least one of the displaying of the preset indication graphic and the popping-up corresponding function prompt information, the method further comprises:
determining whether the touch operation has ended; if it is determined that the touch operation has ended, providing a corresponding instruction or responding to the function prompt information at the indication graphic.

6. The method of claim 1, wherein when the touch operation is multi-touching the auxiliary screen, and the main screen supports only a single touch, the method further comprises:
acquiring a touch parameter of each of the multiple touch points, comparing the touch parameter with a preset condition, and determining an effective touch point according to the comparison result; or
when only one of the multiple touch points is moving, and the remaining touch points are stationary, determining the moving touch point as an effective touch point; or
determining a touch point that starts moving from a preset position as an effective touch point, and tracking a movement trajectory of the effective touch point; if the effective touch point is stationary, and there is a new touch point other than the effective touch point that starts to move from the preset position, determining that the new touch point is an effective touch point, and tracking the new effective touch point instead.

7. The method of claim 6, wherein acquiring a touch parameter of each of the multiple touch points, comparing the touch parameter with a preset condition, and determining an effective touch point according to the comparison result comprises:
acquiring a moving speed of each touch point; if the moving speed of only one touch point is greater than a first threshold, determining that the touch point is an effective touch point; or if the moving speed of each touch point is greater than the first threshold value, determining that the touch point with the largest moving speed is an effective touch point; and
tracking the movement trajectory of the determined effective touch point, if the effective touch point is stationary, and the moving speed of another touch point other than the effective touch point is greater than the first threshold, determining that the other touch point is an effective touch point, and tracking the new effective touch point instead.

8. The method of claim 6, wherein acquiring a touch parameter of each of the multiple touch points, comparing the touch parameter with a preset condition, and determining an effective touch point according to the comparison result comprises:
when each touch point is stationary, acquiring a pressure value of each stationary touch point; if the pressure value of only one touch point is greater than a second threshold, determining the touch point to be an effective touch point, and tracking the movement trajectory of the determined effective touch point; or if the pressure value of more than one touch point is greater than the second threshold, determining that the touch point with the largest pressure value is an effective touch point, and tracking the movement trajectory of the effective touch point; and
if the effective touch point is stationary, and the pressure value of the new touch point other than the effective touch point is greater than the second threshold, determining that the new touch point is an effective touch point, and tracking the new effective touch points instead.

9. The method of claim 6, wherein acquiring a touch parameter of each of the multiple touch points, comparing the touch parameter with a preset condition, and determining an effective touch point according to the comparison result comprises:
determining the movement trajectory of each touch point; if the movement trajectory of the touch point is a preset movement trajectory, determining the touch point to be an effective touch point; or
determining a touch fingerprint corresponding to each touch point; if the touch fingerprint corresponding to the touch point is a preset touch fingerprint, determining the touch point to be an effective touch point.

10. The method according to claim 1, wherein at the same time when determining at least one screen as the auxiliary screen and at least one screen as the main screen, or before determining at least one screen as the auxiliary screen and at least one screen as the main screen, the method further comprises:
setting a display mode of the screen, wherein the display mode comprises: a single screen display and a multi-screen display.

11. The method of claim 1, wherein the at least two screens have the same size or different sizes; the angle between the at least two screens is greater than 0 degrees and less than or equal to 360 degrees.

12. The method of claim 1, wherein the at least one screen is an ink screen or a flexible screen.

13. A device for multi-screen interactive touch display, applied to an electronic device, the electronic device comprising at least two screens; and the device comprising:
a screen determining module configured to determine that at least one screen is an auxiliary screen, and at least one screen other than the auxiliary screen is a main screen;
an acquiring module configured to acquire a touch operation on the auxiliary screen, and determine a position on the main screen corresponding to the touch operation based on the preset correspondence relationship of touch coordinates; and
a processing module configured to respond to an instruction corresponding to the touch operation at the determined position on the main screen, and display the response result on the main screen.

14. The device of claim 13, further comprising: a touch point determining module configured to:
when the touch operation is multi-touching the auxiliary screen, and the main screen supports only a single touch,
acquire a touch parameter of each of the multiple touch points, compare the touch parameter with a preset condition, and determine an effective touch point according to the comparison result; or
when only one of the multiple touch points is moving, and the remaining touch points are stationary, determine the moving touch point as an effective touch point; or
determine a touch point that starts moving from a preset position as an effective touch point, and track a movement trajectory of the effective touch point; if the effective touch point is stationary, and there is a new touch point other than the effective touch point that starts to move from the preset position, determine that the new touch point is an effective touch point, and track the new effective touch point instead.

15. The device of claim 13, further comprising: a setting module configured to, at the same time when the screen determining module determines at least one screen as the auxiliary screen and at least one screen as the main screen, or before the screen determining module determines at least one screen as the auxiliary screen and at least one screen as the main screen, set a display mode of the screen, wherein the display mode comprises: a single screen display and a multi-screen display.

16. A storage medium storing a computer program, the computer program being executed by a processor to implement:
determining at least one screen as an auxiliary screen, and at least one screen other than the auxiliary screen as a main screen;
acquiring a touch operation on the auxiliary screen, and determining a position on the main screen corresponding to the touch operation based on a preset correspondence relationship of touch coordinates; and
responding to an instruction corresponding to the touch operation at the determined position on the main screen, and displaying a response result on the main screen.

17. A terminal comprising a memory, a processor, and a computer program stored on the memory and operative on the processor, the processor executing the computer program to implement:
determining at least one screen as an auxiliary screen, and at least one screen other than the auxiliary screen as a main screen;
acquiring a touch operation on the auxiliary screen, and determining a position on the main screen corresponding to the touch operation based on a preset correspondence relationship of touch coordinates; and
responding to an instruction corresponding to the touch operation at the determined position on the main screen, and displaying a response result on the main screen.
